(19) **Europäisches Patentamt / European Patent Office / Office européen des brevets**

(11) **EP 3 782 802 B1**

(12) # EUROPEAN PATENT SPECIFICATION

(45) Date of publication and mention of the grant of the patent:
**05.01.2022 Bulletin 2022/01**

(51) Int Cl.:
**B29C 64/386** *(2017.01)*     **B29C 64/40** *(2017.01)*
**B33Y 50/00** *(2015.01)*

(21) Application number: **19192326.7**

(22) Date of filing: **19.08.2019**

(54) **IMPOSING QUALITY REQUIREMENTS ON 3D MODELS WITH SUPPORT STRUCTURES**

AUFERLEGUNG VON QUALITÄTSANFORDERUNGEN FÜR 3D-MODELLE MIT STÜTZSTRUKTUREN

IMPOSITION D'EXIGENCES DE QUALITÉ SUR DES MODÈLES 3 D AVEC STRUCTURES DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.02.2021 Bulletin 2021/08**

(73) Proprietors:
• **DENTSPLY SIRONA Inc.**
**York, PA 17401 (US)**
• **Sirona Dental Systems GmbH**
**64625 Bensheim (DE)**

(72) Inventors:
• **Tanaka, Simon**
**64625 Bensheim (DE)**
• **Stahl, Christian**
**64625 Bensheim (DE)**
• **Weiß, Daniel**
**64625 Bensheim (DE)**

(74) Representative: **Özer, Alpdeniz et al**
**Sirona Dental Systems GmbH**
**Corporate Legal**
**Fabrikstraße 31**
**64625 Bensheim (DE)**

(56) References cited:
• **Tian Ooi: "Meshmixer Supports - How to Generate Supports with Meshmixer | All3DP", , 5 November 2018 (2018-11-05), XP055665272, Retrieved from the Internet: URL:https://all3dp.com/2/meshmixer-supports-how-to-generate-supports-with-meshmixer/ [retrieved on 2020-02-05]**
• **SWAELENS BART ET AL: "Support Generation for Rapid Prototyping", PROCEEDINGS OF THE SIXTH INTERNATIONAL CONFERENCE ON RAPID PROTOTYPING, UNIVERSITY OF DAYTON, 04-07/06/1995, UNIVERSITY OF DAYTON, DAYTON, OHIO, USA, 1 June 1995 (1995-06-01), pages 115-121, XP008173950,**
• **TONG WU ET AL: "Enhanced STL", THE INTERNATIONAL JOURNAL OF ADVANCED MANUFACTURING TECHNOLOGY, SPRINGER, BERLIN, DE, vol. 29, no. 11-12, 17 December 2005 (2005-12-17), pages 1143-1150, XP019418889, ISSN: 1433-3015**
• **Anonymous: "STL (file format) - Wikipedia", , 7 December 2016 (2016-12-07), XP055451450, Retrieved from the Internet: URL:https://en.wikipedia.org/w/index.php?title=STL_(file_format)&oldid=75%203510333 [retrieved on 2018-02-15]**

EP 3 782 802 B1

## Description

## TECHNICAL FIELD OF THE INVENTION

The present invention relates to an additive manufacturing method and apparatus. The present invention more particularly relates to a method of additively manufacturing a 3D model including support structures.

## BACKGROUND ART OF THE INVENTION

In additive manufacturing, a 3D object is printed layer-by-layer through light-based curing of a liquid printing medium i.e., a liquid photocurable resin, which is selectively cured under the influence of UV radiation. In a commonly known variation of additive manufacturing, the 3D objects are preferably pulled by means of a platform, upside-down out of the liquid photocurable material filled in a vat. Other variations of additive manufacturing are also known to those skilled in the art.

During the 3D printing, enough support structures must be attached to the 3D object. The locations on the surface of the 3D object where the support structures must be attached depend on the geometry of the 3D object to be 3D printed and the orientation of the 3D object with respect to the platform.

It is generally known in the art which points of a given geometry require support structures for a given orientation of the 3D object. For instance, US 2015/0151492 A1 discloses a method of generating support structures for a 3D object to be additively manufactured.

After the 3D printing, the cleaning, the thermal and/or photochemical curing of the 3D object, the support structures must be mechanically removed. The removal process is time-consuming and potentially leads to a change in the geometry of the 3D object e.g. when finishing with a rotary tool. For dental components such as dental restorations, drilling templates, dental models, and the like with high quality requirements on shape accuracy, the consequences of mechanical post-processing can become critical.

The internet site all3dp.com discloses with date of Nov 5, 2018, a so-called mini-tutorial by Tian

Ooi concerning Meshmixer. Meshmixer is introduced as a small but powerful tool for 3D printing, including generating supports for printable models, see https://all3dp.com/2/meshmixer-supports-how-to-generate-supports-with-meshmixer/.

In the Proceedings of the Sixth International Conference on Rapid Prototyping, June 4-7, 1995, pages 115-121, the article "Support generation for rapid prototyping" by Bart Swaelens et al. discloses further background on support generation.

## DISCLOSURE OF THE INVENTION

An objective of the present invention is to overcome the disadvantages of the prior art and provide a method of imposing quality requirements on a 3D model including support structures to be built by an additive manufacturing apparatus.

This objective has been achieved through the method as defined in claim 1. The dependent claims relate to further developments.

The present invention provides a method of imposing quality requirements on a 3D model including support structures to be built by an additive manufacturing apparatus which comprises a platform for holding the 3D object corresponding to the 3D model. The method comprises: a step of defining the surface geometry and the orientation of the 3D model with respect to the platform, wherein the surface geometry includes surface segments; a step of attributing a degree of quality to the surface segments respectively against post-processing for the subsequent removal of the support structures; a step of calculating, based on the defined orientation, the surface geometry and the degree of quality attributed, the positions on the surface segments where the support structure may be added; and a step of adding the support structure to the 3D model based on the calculated positions and the degree of quality attributed.

A major advantageous effect of the present invention is that, the support structures can be avoided or reduced as much as possible at such locations which, compared to other locations of the 3D object to be 3D printed, have an increased need for protection against mechanical post-processing. Thereby surface artefacts, surface damages, deformations due to mechanical post-processing can be avoided or reduced in sensitive surface segments of the 3D model, and the need for investing manual extra work for a precise removal of the support structures can be obviated or reduced as much as possible. Thereby also the time required for manual post-processing of the 3D printed object can be reduced, and costs can be saved.

According to the present invention, the method steps are performed entirely or at least partly through a computer algorithm. The computer algorithm preferably comprises a neural network capable of recognizing features of the 3D model to be built by the additive manufacturing apparatus. The steps are further performed preferably based on the recognized features. The neural network can be trained with real or simulated 3D models to recognize the surface segments which are sensitive against post-processing. Despite the use of a computer algorithm, in the attributing step a user is optionally allowed to manually mark, on a display of the 3D model, one or more surface segments respectively with a desired degree of quality, or also to define the number of degrees of qualities that can be selectively attributed.

According to the present invention, the degree of quality comprises at least a low degree of quality and a high degree of quality. The low degree of quality implies that the respective surface segment is not worth protecting in post-processing. The high degree of quality implies that the respective surface segment is worth protecting in post-processing. One or more intermediate degrees of quality may also be additionally employed to improve the results.

According to the present invention, specifically in the calculating step, to each surface segment a quantity which indicates a measure of the need of that surface segment to be supported through a support structure is optionally assigned. A larger value of the quantity indicates a stronger need for support. The quantity is preferably a scalar quantity which is a function of the inclination of the surface segment with respect to the building direction. The scalar quantity is preferably equal to the inner product of the normal vector of the surface segment and the unit vector opposite to the building direction. Preferably no support structure is added to the 3D model at a position that falls into a surface segment whose normal vector has a positive component in the building direction. That means such surface segments which point away from the building platform are not suitable for the attachment of a supporting structure. According to the present invention, in the calculating step optionally, first, the positions of all local minima of the 3D model are found with respect to the building direction, and the support structures corresponding to the positions at the local minima are added to the 3D model regardless of the attributed degree of quality. Thereby the risk of misprints can be prevented or reduced as much as possible. According to the present invention, specifically in the calculating step the assignment of the quantity to the surface segment is optionally updated such that the quantity is equal to a first constant for a surface segment at whose position a support structure has been added, and such that the quantities of the neighboring surface segments are reduced through a factor which is a function depending on the three-dimensional distance vector from the surface segment to which the support structure has been added to the neighboring surface segment, wherein the function is unity if the three-dimensional distance vector has no positive component in building direction. The function preferably asymptotically approaches unity with increasing magnitude of the three-dimensional distance vector. Thereafter, the updated quantities of the surface segments are grouped in descending order into groups corresponding to the attributed degree of quality in ascending order. Finally, commencing from the group of the lowest degree of quality to the group of the highest degree of quality, a support structure is added at the surface segment with the largest updated quantity. The steps are repeated for each group until the updated highest quantities drop below predetermined levels respectively associated with the groups.

According to the present invention, the support structures for which the calculated positions fall into in the surface segments which have been attributed a high degree of quality, are optionally not added to the 3D model. Thereby the surface segments which are sensitive against post processing can be protected.

According to the present invention, the support structures for which the calculated positions fall into in the surface segments which have been attributed a high degree of quality are alternatively optionally displaced to nearby surface segments which have been attributed a low degree of quality. Thereby the surface segments which are sensitive against post processing can be protected.

According to the present invention, the surface geometry of the 3D model is preferably represented through triangulation. Such triangulation is convenient for the calculations. Alternatively, other type of meshes with different geometries may be used.

The present invention also provides a computer algorithm having computer-readable codes for causing a CAD module to carry out the method steps. The present invention also provides a computer readable storage which stores the computer algorithm.

## BRIEF DESCRIPTION OF THE DRAWINGS

In the subsequent description, further aspects and advantageous effects of the present invention will be described in more detail by using exemplary embodiments and by referring to the drawings, wherein

Fig. 1 - is an enlarged view of the detail A in Fig. 2, which shows a support structure added to a surface segment on the 3D model;

Fig. 2 - shows the support structures added to the 3D model.

The reference numbers shown in the drawings denote the elements as listed below and will be referred to in the subsequent description of the exemplary embodiments:

1. 3D model / 3D Object
2. Support structure
3. Platform

| | |
|---|---|
| L; H: | Degree of quality |
| L: | Low degree of quality |
| H: | High degree of quality |
| m: | Local minima |
| $i$: | Integer |
| $s_i$: | Scalar Quantity |
| $\vec{n_i}$: | Normal vector of the $i^{th}$ surface segment |
| $\vec{e_{-z}}$: | Vertical unit vector directed towards the platform |

| z: | Vertical direction |
|---|---|
| $c_1, c_2, c_3$ | Constants |
| $f(\vec{r})$: | Function (factor) |
| $\vec{r}$: | Three-dimensional distance vector |
| $r$: | Magnitude of $\vec{r}$ |

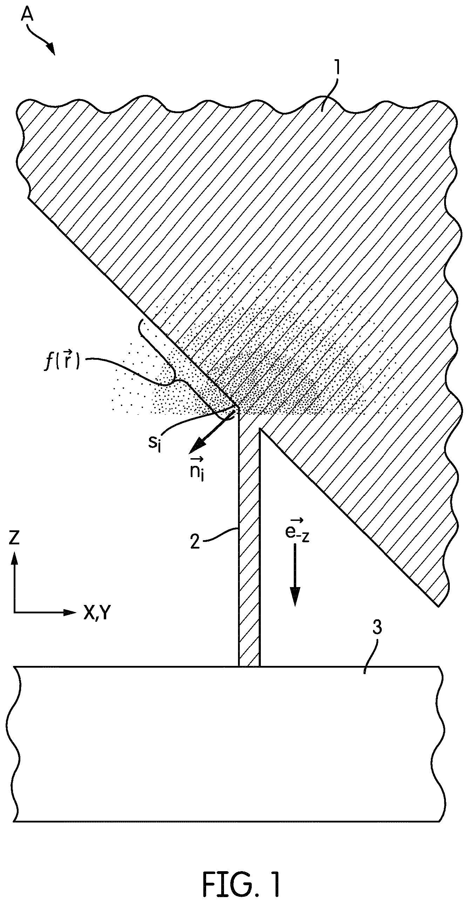

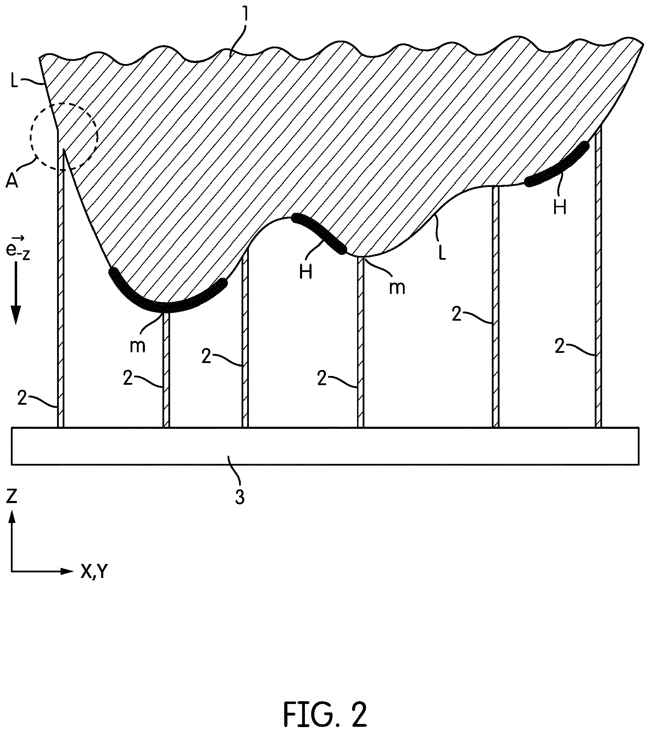

Fig. 2 shows a part of a 3D object (1) according to an embodiment of the present invention. The 3D object (1) is partly built with an additive manufacturing apparatus. The building direction is the z direction. The additive manufacturing apparatus has a platform (3) for holding the 3D object (1). The 3D object (1) includes support structures (2) attached to the platform (3). The 3D object (1) corresponds to a 3D model (1) to which quality requirements have been imposed through the method of the present invention. The method steps are performed through a computer algorithm. The computer algorithm preferably comprises a neural network capable of recognizing features of the 3D model. The method steps are further performed based on these recognized features. The method steps will be described in the following. In a defining step, the surface geometry and the orientation of the 3D model (1) is defined with respect to the platform (3). The surface geometry includes a plurality of surface segments. The surface geometry of the 3D model (1) is represented through triangulation such that the surface segments are triangles (not shown). Other representations may be alternatively used. In an attributing step, a degree of quality (L;H) is attributed to the surface segments respectively indicating the sensitivity and the need of protection against post-processing during any subsequent removal of the support structures (2). The degree of quality (L;H) comprises preferably at least a low degree of quality (L) and a high degree of quality (H). Further degrees of quality may be optionally added. In the attributing step, the user is allowed to mark, on a display of the 3D model (1), one or more surface segments respectively with a desired degree of quality (L;H). Alternatively, the attributing step can be performed entirely by the computer algorithm, without intervention of the user, based on the recognized features. As shown in the exemplary embodiment in Fig. 2, the thick lines on the surface segments of the 3D model (1) indicate a high degree of quality attributed. Other surface segments of the 3D model (1) indicate a low degree of quality attributed. In the calculating step, based on the defined orientation, the surface geometry, and the degree of quality (L;H) attributed, the positions on the surface segments where the support structure (2) may be added are calculated. The calculation step will be explained in more detail with the help of Fig. 1 which is an enlarged view of the detail A in Fig. 2. In the calculating step, as shown in Fig. 1, the $i^{th}$ surface segment is assigned a quantity $s_i$ which indicates a meas-

ure of the need of the $i^{th}$ surface segment to be supported through a support structure (2). $i$ denotes an integer. The larger value of $s_i$ indicates a stronger need for support. The quantity $s_i$ is a scalar quantity which is a function of the inclination of the $i^{th}$ surface segment with respect to the building direction. To be specific, $s_i = \vec{n_i} \cdot \vec{e_{-z}}$, where "·" denotes the inner product, $\vec{n_i}$ denotes the normal vector of the $i^{th}$ surface segment, and $\vec{e_{-z}}$ denotes the vertical unit vector directed towards the platform (3). No support structure (2) is added to the 3D model (1) at a position that falls into a surface segment with $s_i < 0$, i.e., whose normal vector has a positive component in the building direction. In the calculation step, as shown in Fig. 2, first, the positions of all local minima (m) of the 3D model (1) are found. In an adding step, the support structure (2) are added to the 3D model (1) based on the calculated positions and the degree of quality (L;H) attributed. In the adding step, first, the support structures (2) corresponding to the positions at the local minima (m) are added to the 3D model (1) regardless of the value of the attributed degree of quality (L; H). Next, in the calculating step, the assignment of the quantity $s_i$ to the $i^{th}$ surface segment is updated (reassigned) such that $s_i = c_1$ for a surface segment at whose position a support structure (2) has been added, and such that the $s_i$ quantities of the neighboring surface segments are reduced through a factor, namely a function $f(\vec{r})$ wherein $\vec{r}$ is the three-dimensional distance vector from the surface segment to which the support structure (2) has been added to the neighboring surface segment. The function $f(\vec{r})$ is asymptotically approaching unity with increasing magnitude of $\vec{r}$. The dotted area in Fig. 1 indicates the range of the factor $f(\vec{r})$ in the building direction.

For example, $f(\vec{r})$ is preferably defined through the function $1 - Exp\,[-r^2 / c_2{}^2]$. Here $r$ is the magnitude of $\vec{r}$. The constant $c_2$ is a positive constant for the normalization. And $f(\vec{r})$ is unity if $\vec{r}$ has no positive component in building direction. The curly bracket indicates at least part of the range of application of the factor $f(\vec{r})$ in the building direction. The constant $c_1$ is preferably equal to zero. Next, in the calculating step, the updated $s_i$ quantities of the surface segments are grouped in descending order into groups corresponding to the attributed degree of quality. And the groups are further arranged in an ascending order. Next, commencing from the group of the lowest degree of quality (L) to the group of the highest degree of quality (H), a support structure (2) is added at the surface segment with the largest updated $s_i$ quantity. The procedure is cyclically repeated until the updated highest $s_i$ quantities drop below predetermined levels $c_3$ associated with the groups respectively. $c_3$ are constants and define how strongly the 3D model (1) is to be supported. A stronger suppression of support structures (2) on surface segments with higher degree of quality attributed can be achieved by selecting the constant $c_3$ higher for the higher degree of quality. Furthermore, the total number of added support structures (2) can be influenced by the parameter $c_2$.

In an alternative embodiment. the support structures (2) for which the calculated positions fall into surface segments which have been attributed a high degree of quality (H) are not added to the 3D model (1).

In another alternative embodiment, the support structures (2) for which the calculated positions fall into surface segments which have been attributed a high degree of quality (H) are displaced to nearby surface segments which have been attributed a low degree quality (L).

**Claims**

1. A computer-implemented method of imposing quality requirements on a 3D model (1) including support structures (2) to be built by an additive manufacturing apparatus comprising: a platform (3) for holding the 3D object corresponding to the 3D model (1), the method comprising:

   a step of defining the surface geometry and the orientation of the 3D model (1) with respect to the platform (3), wherein the surface geometry includes surface segments;
   **characterized by** further comprising:

   a step of attributing a degree of quality (L;H) to the surface segments respectively against post-processing for the subsequent removal of the support structures (2);
   a step of calculating, based on the defined orientation, the surface geometry and the degree of quality (L;H) attributed, the positions on the surface segments where the support structure (2) may be added; and
   a step of adding the support structure (2) to the 3D model (1) based on the calculated positions and the degree of quality (L;H) attributed.

2. The method according to claim 1, **characterized in that** the steps are performed through a computer algorithm that comprises a neural network capable of recognizing features of the 3D model (1), wherein the steps are further performed based on the recognized features.

3. The method according to any one of claims 1 to 2, **characterized in that** in the attributing step a user can manually mark, on a display of the 3D model (1), one or more surface segments respectively with a desired degree of quality (L;H).

4. The method according to any one of claims 1 to 3, **characterized in that** the degree of quality (L;H) comprises at least a low degree of quality (L) and a high degree of quality (H).

5. The method according to claim 4, **characterized in that** the support structures (2) for which the calculated positions fall into surface segments which have been attributed a high degree of quality (H) are not added to the 3D model (1).

6. The method according to claim 4, **characterized in that** in the adding step the support structures (2) for which the calculated positions fall into surface segments which have been attributed a high degree of quality (H) are displaced to nearby surface segments which have been attributed a low degree of quality (L).

7. The method according to any one of claims 1 to 4, **characterized in that** in the calculation step, first, the positions of all local minima (m) of the 3D model (1) are found; and in the adding step the support structures (2) corresponding to the positions at the local minima (m) are added to the 3D model (1) regardless of the attributed degree of quality (L;H).

8. The method according to any one of claims 1 to 7, **characterized in that** in the calculating step, the $i^{th}$ surface segment is assigned a quantity $s_i$ which indicates a measure of the need of the $i^{th}$ surface segment to be supported through a support structure (2), wherein a larger value of $s_i$ indicates a stronger need for support.

9. The method according to claim 8, **characterized in that** the quantity $s_i$ is a scalar quantity which is a function of the inclination of the $i^{th}$ surface segment with respect to the building direction.

10. The method according to claim 9, **characterized in that** no support structure (2) is added to the 3D model (1) at a position that falls into a surface segment whose normal vector has a positive component in the building direction.

11. The method according to claim 10, **characterized in that** in the calculating step,

    the assignment of the quantity $s_i$ to the $i^{th}$ surface segment is updated such that $s_i = c_1$ for a surface segment at whose position a support structure (2) has been added, and that the $s_i$ quantities of the neighboring surface segments are reduced through a factor $f(\vec{r})$ wherein $\vec{r}$ is the three-dimensional distance vector from the surface segment to which the support structure (2) has been added to the neighboring surface segment, wherein $f(\vec{r})$ is unity if $\vec{r}$ has no component in building direction;

the updated $s_i$ quantities of the surface segments are grouped in descending order into respective groups corresponding to the attributed degree of quality in ascending order;

commencing from the group of the lowest degree of quality (L) to the group of the highest degree of quality (H), a support structure (2) is added at the surface segment with the largest updated $s_i$ quantity; and

the procedure is repeated until the updated highest $s_i$ quantities in each group drop below predetermined levels $c_3$ associated with the groups respectively, wherein each $c_3$ is a constant.

12. The method according to claim 11, **characterized in that** the function $f(\vec{r})$ asymptotically approaches unity with increasing magnitude of $\vec{r}$.

13. The method according to claim 12, **characterized in that** the function $f(\vec{r})$ is defined through

$$1 - e^{-\frac{r^2}{c_2{}^2}}$$ where $c_2$ is a positive constant.

14. The method according to any one of claims 12 to 13, **characterized in that** $c_1 = 0$.

15. A program comprising computer readable codes for causing a CAD/CAM module to carry out the steps of the method according to any one of claims 1 to 14.

16. A computer readable storage which stores the program according to claim 15.

**Patentansprüche**

1. Computerimplementiertes Verfahren zum Auferlegen von Qualitätsanforderungen für ein 3D-Modell (1), das Stützstrukturen (2) enthält, die durch eine additive Herstellungsvorrichtung zu bauen sind, umfassend: eine Plattform (3) zum Halten des 3D-Objekts, das dem 3D-Modell (1) entspricht, wobei das Verfahren umfasst:

einen Schritt des Definierens der Oberflächengeometrie und der Ausrichtung des 3D-Modells (1) in Bezug auf die Plattform (3), wobei die Oberflächengeometrie Oberflächensegmente enthält;

**dadurch gekennzeichnet, dass** es ferner umfasst:

einen Schritt des Zuordnens eines Qualitätsgrades (L; H) zu den Oberflächensegmenten jeweils gegen Nachbearbeitung für die nachfolgende Entfernung der Stützstrukturen (2);

einen Schritt des Berechnens der Positionen auf den Oberflächensegmenten, in denen die Stützstruktur (2) hinzugefügt werden kann, auf der Grundlage der definierten Ausrichtung, der Oberflächengeometrie und des zugewiesenen Qualitätsgrades (L; H); und

einen Schritt des Hinzufügens der Stützstruktur (2) zum 3D-Modell (1) auf der Grundlage der berechneten Positionen und des zugewiesenen Qualitätsgrades (L; H).

2. Verfahren nach Anspruch 1, **dadurch gekennzeichnet, dass** die Schritte durch einen Computeralgorithmus ausgeführt werden, der ein neuronales Netz umfasst, das in der Lage ist, Merkmale des 3D-Modells (1) zu erkennen, wobei die Schritte ferner auf der Grundlage der erkannten Merkmale ausgeführt werden.

3. Verfahren nach einem der Ansprüche 1 bis 2, **dadurch gekennzeichnet, dass** ein Benutzer im Zuordnungsschritt auf einer Anzeige des 3D-Modells (1) manuell ein oder mehrere Oberflächensegmente jeweils mit einem gewünschten Qualitätsgrad (L; H) markieren kann.

4. Verfahren nach einem der Ansprüche 1 bis 3, **dadurch gekennzeichnet, dass** der Qualitätsgrad (L; H) mindestens einen niedrigen Qualitätsgrad (L) und einen hohen Qualitätsgrad (H) umfasst.

5. Verfahren nach Anspruch 4, **dadurch gekennzeichnet, dass** die Stützstrukturen (2), deren berechnete Positionen in Oberflächensegmente fallen, denen ein hoher Qualitätsgrad (H) zugeordnet wurde, nicht zum 3D-Modell (1) hinzugefügt werden.

6. Verfahren nach Anspruch 4, **dadurch gekennzeichnet, dass** im Hinzufügungsschritt die Stützstrukturen (2), deren berechnete Positionen in Oberflächensegmente fallen, denen ein hoher Qualitätsgrad (H) zugeordnet wurde, in nahegelegene Oberflächensegmente verschoben werden, denen ein niedriger Qualitätsgrad (L) zugeordnet wurde.

7. Verfahren nach einem der Ansprüche 1 bis 4, **dadurch gekennzeichnet, dass** im Berechnungsschritt zunächst die Positionen aller lokalen Minima (m) des 3D-Modells (1) ermittelt werden; und im Hinzufügungsschritt die den Positionen an den lokalen Minima (m) entsprechenden Stützstrukturen (2) ungeachtet des zugeordneten Qualitätsgrades (L; H) zum 3D-Modell (1) hinzugefügt werden.

**8.** Verfahren nach einem der Ansprüche 1 bis 7, **dadurch gekennzeichnet, dass** im Berechnungsschritt dem *i-ten* Oberflächensegment eine Größe $s_i$ zugewiesen wird, die ein Maß für den Bedarf des *i-ten* Oberflächensegments angibt, durch eine Stützstruktur (2) gestützt zu werden, wobei ein größerer Wert von $s_i$ einen stärkeren Unterstützungsbedarf anzeigt.

**9.** Verfahren nach Anspruch 8, **dadurch gekennzeichnet, dass** die Größe $s_i$ eine skalare Größe ist, die eine Funktion der Neigung des *i-ten* Oberflächensegments bezüglich der Baurichtung ist.

**10.** Verfahren nach Anspruch 9, **dadurch gekennzeichnet, dass** dem 3D-Modell (1) in einer Position, die in ein Oberflächensegment fällt, dessen Normalenvektor eine positive Komponente in Baurichtung hat, keine Stützstruktur (2) hinzugefügt wird.

**11.** Verfahren nach Anspruch 10, **dadurch gekennzeichnet, dass** im Berechnungsschritt die Zuweisung der Größe $s_i$ zum *i-ten* Oberflächensegment so aktualisiert wird, dass $s_i = c_1$ für ein Oberflächensegment, in dessen Position eine Stützstruktur (2) hinzugefügt wurde, und dass die $s_i$-Mengen der benachbarten Oberflächensegmente um einen Faktor $f(\vec{r})$ reduziert werden, wobei $\vec{r}$ der dreidimensionale Abstandsvektor vom Oberflächensegment, zu dem die Stützstruktur (2) hinzugefügt wurde, zum benachbarten Oberflächensegment ist, wobei $f(\vec{r})$ eins ist, wenn $\vec{r}$ keine Komponente in Baurichtung hat;

die aktualisierten $s_i$-Mengen der Oberflächensegmente in absteigender Reihenfolge in jeweilige Gruppen gruppiert werden, die dem zugeordneten Qualitätsgrad in aufsteigender Reihenfolge entsprechen;
beginnend von der Gruppe des niedrigsten Qualitätsgrades (L) bis zur Gruppe des höchsten Qualitätsgrades (H) eine Stützstruktur (2) am Oberflächensegment mit der größten aktualisierten $s_i$-Menge hinzugefügt wird; und
die Prozedur wiederholt wird, bis die aktualisierten höchsten $s_i$-Mengen in jeder Gruppe unter vorbestimmte Niveaus $c_3$ fallen, die jeweils mit den Gruppen assoziiert sind, wobei jedes $c_3$ eine Konstante ist.

**12.** Verfahren nach Anspruch 11, **dadurch gekennzeichnet, dass** sich die Funktion $f(\vec{r})$ mit zunehmender Größe von $\vec{r}$ asymptotisch eins nähert.

**13.** Verfahren nach Anspruch 12, **dadurch gekennzeichnet, dass** die Funktion $f(\vec{r})$ durch $1 - e^{-\frac{r^2}{c_2^2}}$

definiert ist, wobei $c_2$ eine positive Konstante ist.

**14.** Verfahren nach einem der Ansprüche 12 bis 13, **dadurch gekennzeichnet, dass** $c_1 = 0$ ist.

**15.** Programm mit computerlesbaren Codes, um ein CAD/CAM-Modul zu veranlassen, die Schritte des Verfahrens nach einem der Ansprüche 1 bis 14 auszuführen.

**16.** Computerlesbarer Speicher, der das Programm nach Anspruch 15 speichert.

**Revendications**

**1.** Procédé implémenté par ordinateur d'imposition d'exigences de qualité à un modèle 3 D (1) comprenant des structures de support (2) à construire par un appareil de fabrication additive comprenant : une plateforme (3) permettant de contenir l'objet 3 D correspondant au modèle 3 D (1), le procédé comprenant :

une étape de définition de la géométrie de surface et de l'orientation du modèle 3 D (1) par rapport à la plateforme (3), la géométrie de surface comprenant des segments de surface ;
**caractérisé en ce qu'**il comprend en outre :

une étape d'attribution d'un degré de qualité (L ; H) aux segments de surface, respectivement par rapport au post-traitement pour le retrait ultérieur des structures de support (2) ;
une étape de calcul, en fonction de l'orientation définie, de la géométrie de surface et du degré de qualité (L ; H) attribué, des positions sur les segments de surface où la structure de support (2) peut être ajoutée ; et
une étape d'ajout de la structure de support (2) au modèle 3 D (1) en fonction des positions calculées et du degré de qualité (L ; H) attribué.

**2.** Procédé selon la revendication 1, **caractérisé en ce que** les étapes sont exécutées par un algorithme informatique comprenant un réseau neuronal susceptible de reconnaître des caractéristiques du modèle 3 D (1), les étapes étant en outre exécutées en fonction des caractéristiques reconnues.

**3.** Procédé selon l'une quelconque des revendications 1 ou 2, **caractérisé en ce que**, lors de l'étape d'attribution, un utilisateur peut marquer manuellement, sur un affichage du modèle 3 D (1), un ou plusieurs segments de surface respectivement, selon un degré souhaité de qualité (L ; H).

4. Procédé selon l'une quelconque des revendications 1 à 3, **caractérisé en ce que** le degré de qualité (L ; H) comprend au moins un degré de qualité bas (L) et un degré de qualité haut (H).

5. Procédé selon la revendication 4, **caractérisé en ce que** les structures de support (2) pour lesquelles les positions calculées tombent dans des segments de surface auxquels a été attribué un degré de qualité haut (H) ne sont pas ajoutées au modèle 3 D (1).

6. Procédé selon la revendication 4, **caractérisé en ce que**, lors de l'étape d'ajout, les structures de support (2) pour lesquelles les positions calculées tombent dans des segments de surface auxquels a été attribué un degré de qualité haut (H) sont déplacées vers des segments de surface voisins auxquels a été attribué un degré de qualité bas (L).

7. Procédé selon l'une quelconque des revendications 1 à 4, **caractérisé en ce que**, lors de l'étape de calcul, les positions de tous les minima locaux (m) du modèle 3 D (1) sont d'abord trouvées ; et, lors de l'étape d'ajout, les structures de support (2) correspondant aux positions aux minima locaux (m) sont ajoutées au modèle 3 D (1) quel que soit le degré de qualité attribué (L ; H).

8. Procédé selon l'une quelconque des revendications 1 à 7, **caractérisé en ce que**, lors de l'étape de calcul, une grandeur $s_i$ est affectée au $i^{ème}$ segment de surface, ce qui indique une mesure du besoin du $i^{ème}$ segment de surface d'être soutenu par une structure de support (2), une plus grande valeur de $s_i$ indiquant un besoin accru de support.

9. Procédé selon la revendication 8, **caractérisé en ce que** la grandeur $s_i$ est une grandeur scalaire qui est fonction de l'inclinaison du $i^{ème}$ segment de surface par rapport à la direction de construction.

10. Procédé selon la revendication 9, **caractérisé en ce qu'**aucune structure de support (2) n'est ajoutée au modèle 3 D (1) au niveau d'une position qui tombe dans un segment de surface dont le vecteur normal possède une composante positive dans la direction de construction.

11. Procédé selon la revendication 10, **caractérisé en ce que**, lors de l'étape de calcul, l'attribution de la grandeur $s_i$ au $i^{ème}$ segment de surface est mise à jour de sorte que $s_i = c_1$ pour un segment de surface au niveau de la position duquel une structure de support (2) a été ajoutée et que les grandeurs $s_i$ des segments de surface voisins soient réduits d'un facteur $f(\vec{r})$, dans laquelle $\vec{r}$ représente le vecteur tridimensionnel de distance du segment de surface à partir duquel la structure de support (2) a été ajoutée au segment voisin de surface, où $f(\vec{r})$ vaut un si $\vec{r}$ n'a aucune composante selon la direction de construction ;

les grandeurs $s_i$ mises à jour des segments de surface sont regroupées dans l'ordre décroissant en groupes respectifs correspondant au degré de qualité attribué dans l'ordre croissant ; en allant du groupe au degré de qualité le plus bas (L) au groupe au degré de qualité le plus haut (H), une structure de support (2) est ajoutée au niveau du segment de surface à grandeur $s_i$ mise à jour la plus haute ; et la procédure est répétée jusqu'à ce que les grandeurs $s_i$ mises à jour les plus hautes dans chaque groupe tombe au-dessous de niveaux prédéterminés $c_3$ respectivement associés aux groupes, chaque $c_3$ représentant une constante.

12. Procédé selon la revendication 11, **caractérisé en ce que** la fonction $f(\vec{r})$ se rapproche asymptotiquement de un avec une amplitude croissante de $\vec{r}$.

13. Procédé selon la revendication 12, **caractérisé en ce que** la fonction $f(\vec{r})$ est définie par $1 - e^{-\frac{r^2}{c_2^2}}$ où $c_2$ représente une constante positive.

14. Procédé selon l'une quelconque des revendications 12 ou 13, **caractérisé en ce que** $c_1 = 0$.

15. Programme comprenant des codes lisibles par ordinateur permettant d'amener un module de DAO/FAO à exécuter les étapes du procédé selon l'une quelconque des revendications 1 à 14.

16. Stockage lisible par ordinateur qui mémorise le programme selon la revendication 15.

A

1

$f(\vec{r})$

$s_i$

$\vec{n}_i$

Z

X,Y

2

$\vec{e}_{-z}$

3

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150151492 A1

**Non-patent literature cited in the description**

- *Proceedings of the Sixth International Conference on Rapid Prototying,* 04 June 1995, 115-121

- **BART SWAELENS.** *Support generation for rapid prototyping*